Europäisches Patentamt

(19) European Patent Office

Office européen des brevets

(11) Publication number: **0 087 244**
**A1**

(12) # EUROPEAN PATENT APPLICATION

(21) Application number: **83300637.2**

(51) Int. Cl.³: **B 60 J 7/24**

(22) Date of filing: **09.02.83**

(30) Priority: **11.02.82 GB 8204058**

(43) Date of publication of application:
**31.08.83 Bulletin 83/35**

(84) Designated Contracting States:
**BE CH DE FR IT LI NL SE**

(71) Applicant: **Keane, Cecil James**
**4 Homecroft Road**
**Yardley Birmingham, B25 8XN(GB)**

(72) Inventor: **Keane, Cecil James**
**4 Homecroft Road**
**Yardley Birmingham, B25 8XN(GB)**

(74) Representative: **Wilson, Thomas Arthur Fletcher et al,**
**10, Grosvenor House Grosvenor Road**
**Coventry West Midlands, CV1 3FZ(GB)**

(54) Canopy and support structure therefor.

(57) A canopy and support structure primarily for a tractor comprises a canopy (1) of canvas or other flexible sheet material (e.g. nylon reinforced polypropylene) which is maintained in the extended condition by a frame (2, 20) mounted on rear uprights (7) which are secured at their lower ends (at 71) to the rear axle casing (30) of the tractor (3). The frame members (40, 50, 60) of the frame (2, 20) are received by open ended tubular formations or channels (14, 15, 16) of the canopy (1) and the frame (2, 20) can be readily taken aprt or collapsed by disconnection of the frame members (40, 50, 60) to enable the canopy (1) to be rolled up i.e. after removal of the frame members (50). Interfitting tubular assembly (e.g. at 620) is shown received by sockets (67) at the upper ends of the uprights (7). The uprights (7) are also shown attachable to the rear wheel fenders (31) of the tractor and connected by a strengthening cross bar (9).

Fig.1.

EP 0 087 244 A1

./...

Fig.8

The object of this invention is to provide a canopy and support structure therefor of simple and effective construction primarily for providing a sun canopy over the driving position on an agricultural tractor or for similar use on other vehicles or even on some kinds of water craft. A particular object is to provide a canopy and support structure which virtually provides no hindrance to vision from the driving position and which can be readily removed when not required and folded or rolled up for stowage.

According to this invention a canopy and support structure therefor primarily for use on a tractor comprises a canopy of flexible sheet material such as canvas or similar material provided with open ended tubular formation of the same or similar material at or adjacent its sides and which receive frame members therethrough forming a frame of rectangular or other suitable shape to maintain the canopy in its extended condition of use, the frame being mounted or mountable on uprights for supporting it and the canopy from the tractor over the driving position or for similar purposes.

A practical example of the invention as a sun canopy for a tractor is shown in the accompanying drawings in which:-

> FIGURE 1         is a diagrammatic perspective view of the canopy mounted on a tractor,

FIGURE 2          is an underside plan view
                  showing the canopy and one
                  form of the frame,

FIGURE 3          is a plan view of the frame
                  of FIGURE 2 per se in the
                  unassembled condition.

FIGURE 4          is an underside plan view similar
                  to FIGURE 2 but showing a modified construction of frame,

FIGURE 5          is an enlarged scale detail view
                  of a socket assembly,

FIGURE 6          is a perspective view of the
                  rolled up canopy and uprights as
                  a package for transit or stowage.

FIGURE 7          is a side elevation of a developed
                  form of upright, and

FIGURES 8 and 9   are respectively an underside
                  plan view and detail view similar
                  to FIGURES 4 and 5 but showing
                  further modification.

Like parts are referred to by the same or similar
reference numerals throughout the drawings.

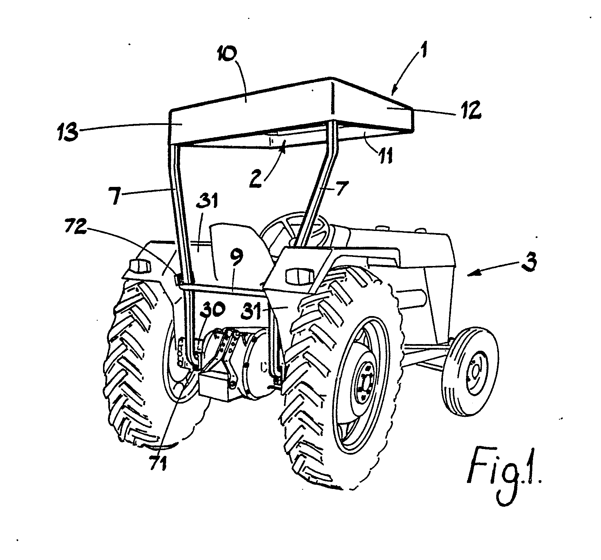

Referring to FIGURES 1 to 3 the canopy 1 itself is made of
heavy duty canvas or other suitable sheet material such as
nylon reinforced polypropylene and consists of a top panel
10 which is boxed to provide front, side and rear skirts

11, 12, 13 of which the rear skirt 13 can be of greater depth than the front skirt 11 with the side skirts 12 tapered accordingly as shown in FIGURE 1.

The underside of the top panel 10 is provided with open ended tubular formations or channels 14, 15 and 16 of similar material sewn or otherwise secured to it adjacent the skirts 11, 12, 13 and receiving the canopy frame members 4, 5 and 6 shown of round section or other suitable tubing.

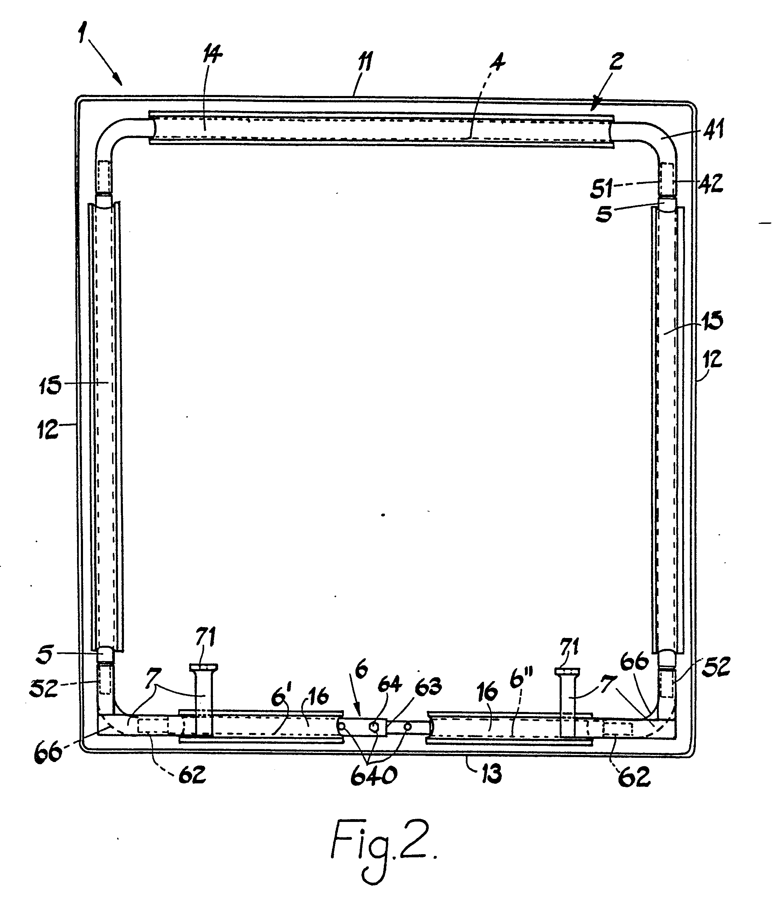

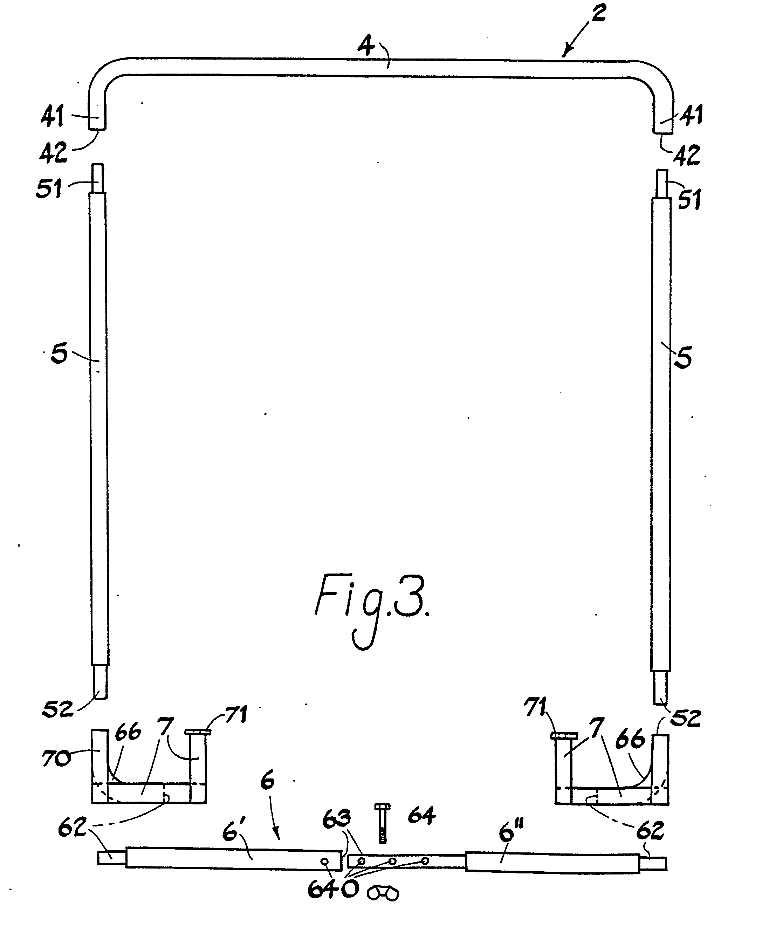

In the example shown the forward frame member 4 of the frame 2 (FIGURES 2 and 3) is permanently retained in the corresponding canvas channel 14 and is provided with short right angle end portions 41 providing sockets 42 for receiving reduced end portions 51 of corresponding side frame members 5 slidably inserted in respective canvas side channels 15.

The other ends of the side members 5 have a similar projection and socket engagement at 52 with right angle corner pieces 66 which in turn have a socket engagement at 62 with the rear frame member assembly 6.

The rear frame member assembly 6 is in two parts 6', 6'' slidable in respective canvas channels 16 and having a socket engagement 63 at a mid part or thereabouts so that the assembly 6 can be retracted for disengagement from the end pieces 66 or extended into engagement with the latter and retained in the extended condition by a bolt 64 passing through a transverse hole 640, more than one of such holes being provided in each member for adjustment purposes.

For the various socket engagements at 42, 52, 62 and 63 the ends of the side and rear frame members 5, 6 receive smaller diameter inserts of tube or round section bar.

Each rear corner piece 66 is welded or otherwise fast with the upper curved or bent end 70 of a corresponding upright 7 the lower end of which is provided with a bracket 71 or otherwise adapted to be secured to appropriate structure of the tractor 3 such as to the rear axle casing 30 of the latter.

With the frame 2 in the assembled and locked condition in the canopy 1 so as to maintain the latter in the extended condition, the canopy can be quickly mounted on the tractor 3 and in view of the fact that only two rearwardly situated uprights 7 are employed, virtually unrestricted all round vision is afforded from the driving position as will be evident from FIGURE 1.

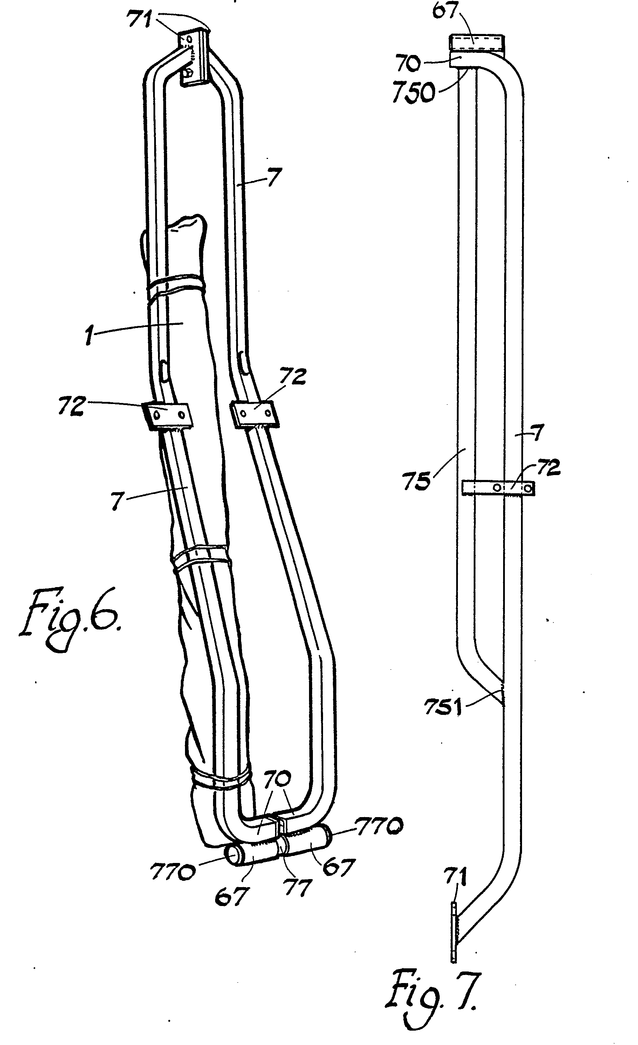

When the canopy 1 is not required for use, the uprights 7 are detached from the tractor 3 after which on laying the canopy 1 upside down on the ground or other surface, the bolt 64 can be withdrawn to enable the rear frame member assembly 6', 6'' to be retracted in a telescopic manner out of engagement with the corner pieces 66.    The side frame members 5 can then be
withdrawn from their canvas channels 15 and out of socket
engagement with the ends 41 of the forward member 4 prior
to or after dis-engagement from the corner pieces 66 thus
leaving only the forward cross member 4 and rear cross
member assembly 6 retained on the canopy 1.    It is then
possible to roll up the canopy 1 at the same time including
the side members 5 placed across the canopy parallel with
the front and rear cross members 4, 6, 6'' for inclusion in
the rolled up canopy.    The uprights 7 can be similarly
included if so desired or the rolled up canopy 1(with frame
members therein) and uprights 7 can be packaged for transit
or stowage in the manner shown in FIGURE 6.

For adequate strength the frame members 4, 5 and 6 or more
particularly the uprights 7 may consist of lined tubing, i.e.
outer tubing having an inner reinforcement of smaller diameter
tubing.    This enables uprights 7 of adequate strength to be
provided for supporting the canopy 1 having regard to the
shocks imparted to it as the tractor travels over rough terrain.
The uprights 7 are shown of square section tube.

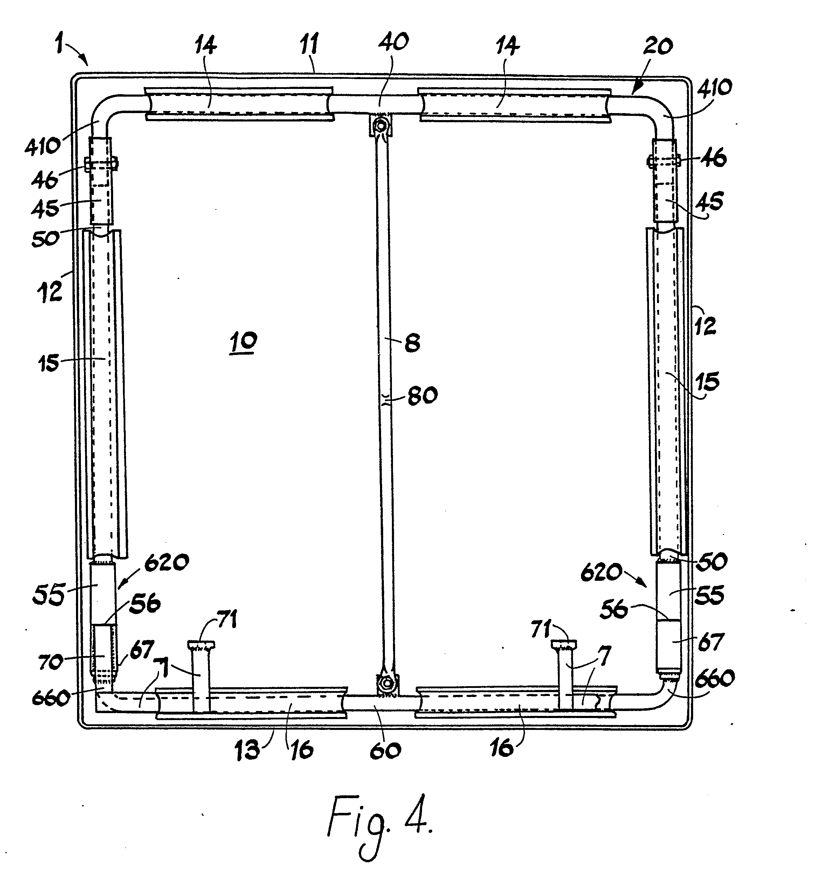

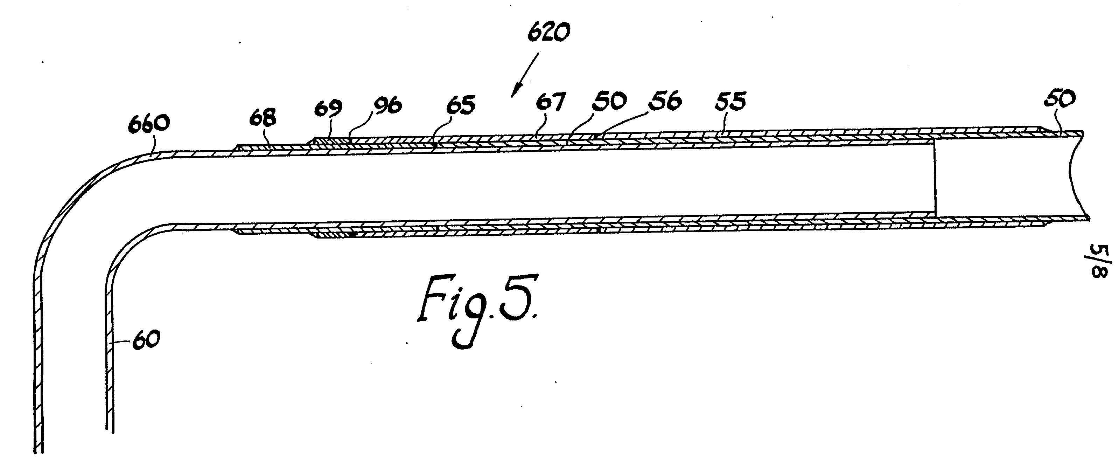

Referring to FIGURES 4 and 5 an alternative construction of
frame 20 is shown in which the forward cross member 40 has
right angled end portions 410 received by sleeves 45 which
also receive the forward end portions of corresponding side
frame members 50.    The sleeves 45 are retained in the
connecting position by transverse bolts 46 passing through
them and the end portions 410 (and/or if desired through the forward end portions of the side members 50) so that by removal of the bolts 46 the sleeves 45 can be slid back out of engagement with the end portions 410 or from the side members 50.

The rear end portions of the side members 50 have a socket engagement 620 with right angled end portions 660 of the rear frame member 60. In the assembled condition of the frame shown in FIGURE 4 this socket engagement 620 is retained by a tie bar 8 bolted or otherwise detachably connected at respective ends to the forward and rear frame members 40, 60 which tie bar 8 is disconnected when it is required to dismantle the frame 20. The tie bar 8 is preferably bowed or arched upwardly as indicated at 80 in order to raise the centre part of the top panel 10 of the canopy 1 for rain water drainage.

The socket engagement 620 is shown consisting of a multiple co-axially inter-fitting tubular assembly for adequate strength in supporting the frame 20 from the uprights 7. Thus as shown in FIGURE 5 the forwardly extending limb of each right angled end portion 660 of the rear frame member 60 has welded or otherwise secured co-axially about it a length of tube 68 which abuts at 65 the rear end of the corresponding tubular side member 50 within an outer sleeve 67. The side member 50 also has a length of co-axial tube 55 welded about it and which abuts at 56 the forward end of the outer sleeve 67 which is welded onto the bent upper
end 70 of a corresponding upright 7 (see FIGURES 4 and 6).
Finally a collar 69 welded about the tube 68 abuts at 96
the rear end of the sleeve 67.        The sleeves 67 may be
of greater wall thickness than the tubes 55, 68.

After the tie bar 8 has been disconnected the socket
assembly 620 can be readily taken apart to dis-connect
the  side members 50 from the rear member 60 and the
uprights 7 from both of the latter whilst the interfitting
co-axial engagement of the members 660, 68, 50, 55 within
or in relation to the sleeves 67 provides high strength
connection of the uprights 7 to the frame 20.

In order to further support the uprights 7 they are shown
bolted to the rear wheel fenders 31 (FIGURE 1) of the
tractor 3 by means of plates 72 welded on the uprights 7,
packing pieces or plates being provided as necessary to take
up any clearance between each upright 7 and the adjacent
fender 31.        The attachment in this way is further
strengthened by a cross bar 9 bolted by lugged ends to the
plates 72 and which also serves  to reinforce support of
the fenders 31.

In the package form of the rolled up canopy 1 and uprights 7
shown in FIGURE 6 the mounting brackets 71 of the uprights
are bolted together and the sleeves 67 held together by a
length of tube or rod 77 inserted through them and which may

receive end caps 770. The tube 77 and end caps 770 e.g. of plastic material are for transit and stowage purposes only and form no part of the assembled canopy and support structure. Where the uprights 7 carry corner pieces 60 as in FIGURES 2 and 3, the tube 77 is inserted in the ends of opposed corner piece limbs in a similar manner.

Referring to FIGURE 7 a developed form of upright 7 is shown and which is provided with a parallel reinforcement member 75 welded at 750 to the main member 7 i.e. to the upper end 70 of the latter and to a lower part at 751 intermediate the fender bracket 72 and lower bracket 71. The fender bracket 72 is also shown welded to the reinforcement member 75.

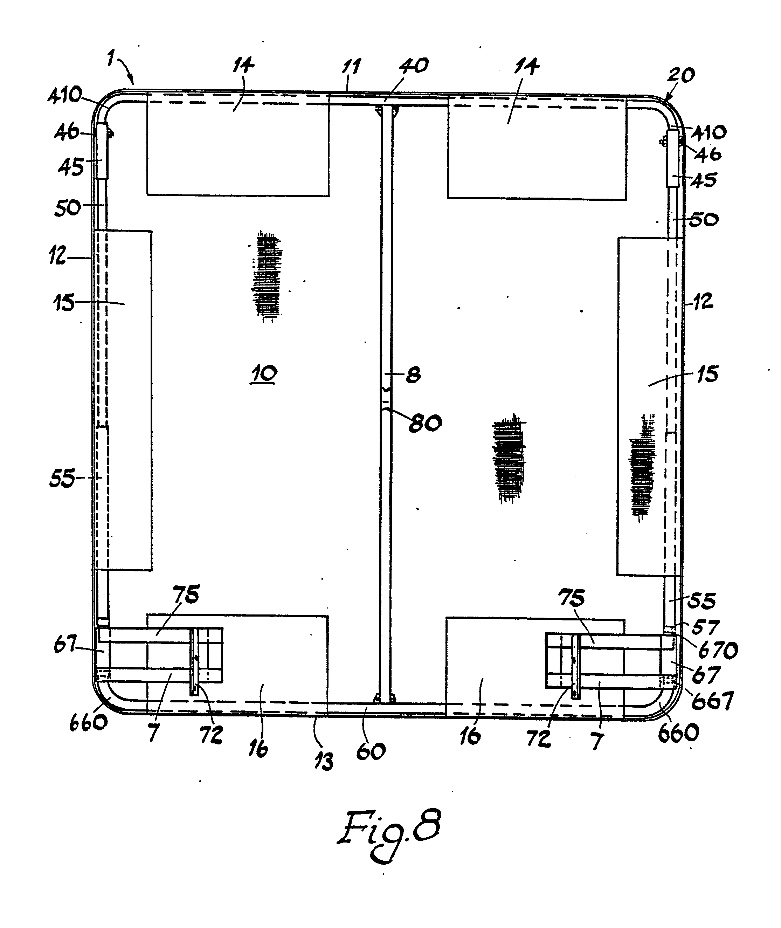

Uprights according to FIGURE 7 are shown in FIGURE 8 where the construction of the frame 20 is generally similar to that shown in FIGURE 4. However the canopy 1 is provided with somewhat wider open ended channels or pockets 14, 15, 16 for freedom of movement of the frame members 40, 50, 60 in assembling the frame 20 to extend the canopy 1 or in taking the frame apart prior to rolling up the canopy.

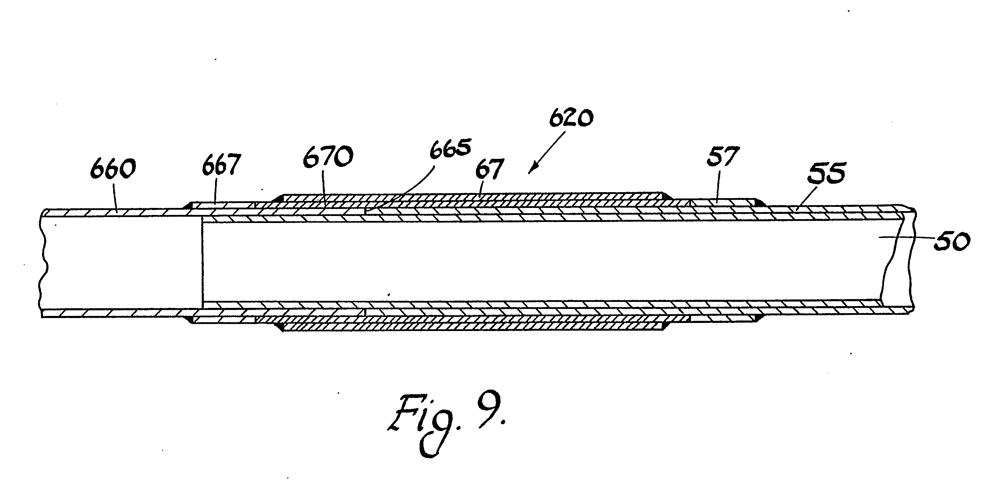

Multiple interfitting co-axial tubular assembly of the frame 20 where it passes through the upright sockets 67 is shown in FIGURE 9 where each side member 50 is provided with an outer sleeve 55 which in this case enters within an internal liner sleeve 670 of the associated socket 67, a collar 57 about the sleeve 55 abutting the forward end part of the liner sleeve 670 adjacent welding of the latter to the socket 67.            A forward end of the corner portion 660 of the rear frame member 60 is received over the rear end part of the side member 50 and abuts the rear end of the outer sleeve 55 at 665.        A collar 667 about the corner portion 660 also abuts the rear end of the liner sleeve 670.

As before the frame 20 is retained in the assembled condition by the tie bar 8.

## CLAIMS

1. A canopy and support structure therefor primarily for use on a tractor comprising a canopy (1) of flexible sheet material such as canvas or similar material provided with open ended tubular formation (14, 15, 16) of the same or similar material at or adjacent its sides (11, 12, 13) and which receive frame members (4, 5, 6 or 40, 50, 60) therethrough forming a frame (2 or 20) of rectangular or other suitable shape to maintain the canopy (1) in its extended condition of use, the frame (2 or 20) being mounted or mountable on uprights (7) for supporting it and the canopy (1) from the tractor (3) over the driving position of the latter or for similar purposes.

2. A canopy and support structure therefor according to claim 1 wherein the frame (2 or 20) is mounted or mountable at its rear on the uprights (7) whereby virtually unrestricted all round vision is afforded from the driving or similar position of the tractor (3).

3. A canopy and support structure therefor according to claim 1 or 2 wherein the frame (2 or 20) is releasably retained in the extended condition and on release of retaining means (64 or 8) can be taken apart or collapsed for enabling the canopy (1) to be folded or rolled up for stowage or transit purposes.

4. A canopy and support structure therefor according to claim 3 wherein frame members (4, 5, 6 or 40, 50, 60) of the frame (2 or 20) are disconnectible and, when disconnected, at least some (5, 50) of them are removable from the tubular formation (15) of the canopy (1) to enable the canopy (1) to be folded or rolled up.

5. A canopy and support structure therefor according to claim 4 wherein the disconnectible frame members (4, 5, 6 or 40, 50, 60) have a socket engagement (42, 52, 62, 63 or 45, 620) with one another.

6. A canopy and support structure therefor according to claim 3 and any claim appendant thereto wherein the frame (20) is releasably retained in the extended condition by a detachable tie bar (8) connected between opposite members (40, 60) of the frame (20).

7. A canopy and support structure therefor according to any of the preceding claims wherein frame members (5, 6 or 50, 60) of the frame (2, 20) adjacent the uprights (7) are received by or through sockets (66, 67) carried by the uprights (7).

8.  A canopy and support structure therefor according to claim 7 wherein the frame members (50, 60) adjacent the uprights (7) consist of a co-axial interfitting tubular assembly (620) where they are received by the sockets (67) of the uprights (7).

9.  A canopy and support structure therefor according to any of the preceding claims wherein lower ends (71) of the uprights (7) are adapted to be secured such as by bolting to a rear axle casing (30)of a tractor (3).

10. A canopy and support structure therefor according to any of the preceding claims wherein the uprights (7) are adapted to be attached (at 72) such as by bolting to rear wheel fenders (31) of a tractor (3).

11. A canopy and support structure therefor according to claim 10 wherein a cross bar (9) is provided which in use is connected between the uprights (7) at or adjacent their attachment (72) to the rear wheel fenders (31) of a tractor (3).

*Fig.1.*

Fig.2.

Fig.3.

Fig. 4.

Fig.5.

620

660    68    69    96    65    67    50    56    55    50

60

5/8

0087244

0087244

Fig.6.

Fig.7.

Fig.8

Fig. 9.

0087244

European Patent Office

**EUROPEAN SEARCH REPORT**

**0087244**
Application number

EP  83 30 0637

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| | | | B 60 J    7/24 |
| A | DE-A-2 719 041  (KUBOTA) <br> * Claim 6 * | 1 | |
| A | MACHINE DESIGN, vol. 46, no. 7, March 1974, pages 200,202 "Light duty ROPS" | 1,2 | |
| A | US-A-3 188 111  (ELLS) | | |
| A | DE-A-1 630 535  (FENOT) | | |
| A | US-A-1 716 212  (CUSHMAN) | | |

TECHNICAL FIELDS SEARCHED (Int. Cl. 3)

B 60 J
B 62 D
E 02 F

The present search report has been drawn up for all claims

| Place of search <br> THE HAGUE | Date of completion of the search <br> 27-05-1983 | Examiner <br> SCHMITTER J.M. |
|---|---|---|